# EUROPÄISCHE PATENTSCHRIFT

(11) **EP 3 523 182 B1**
(45) Veröffentlichungstag und Bekanntmachung des Hinweises auf die Patenterteilung: **17.06.2020**
(21) Anmeldenummer: 17780097.6
(22) Anmeldetag: 05.10.2017
(51) Int. Cl.: B62D 21/11

(54) **TRÄGERKONSTRUKTION FÜR EIN FAHRZEUG**
SUPPORT STRUCTURE FOR A VEHICLE
STRUCTURE PORTEUSE POUR UN VÉHICULE

(30) Priorität: 06.10.2016 DE 102016118952
(43) Veröffentlichungstag der Anmeldung: 14.08.2019
(73) Patentinhaber: Kirchhoff Automotive Deutschland GmbH, 57439 Attendorn (DE)
(72) Erfinder: GÜNDOGAN, Aydogan, 58840 Plettenberg (DE)
(74) Vertreter: Haverkamp, Jens
(86) Internationale Anmeldenummer: PCT/EP2017/075315
(87) Internationale Veröffentlichungsnummer: WO 2018/065510

(56) Entgegenhaltungen:
- JP-A- 2005 289 115
- JP-A- 2014 118 093
- JP-U- H0 254 681
- US-A1- 2012 319 389

## Beschreibung

Die Erfindung betrifft eine Trägerkonstruktion für ein Fahrzeug mit einem eine obere Schale und eine untere Schale aufweisenden Träger, wobei die Erstreckung der Trägerkonstruktion in Längserstreckung des Fahrzeuges durch die in diese Richtung weisende Erstreckung der beiden Schalen definiert ist, und mit Anbindungspunkten zum Anschließen eines Lenkers, wobei an jeder Lenkeranbindungsseite ein vorderer Anbindungspunkt und ein hinterer Anbindungspunkt vorgesehen sind.

Bei Fahrzeugen werden zum Aufbau des Chassis verschiedene, auch hierarchisch zueinander angeordnete Rahmenkonstruktionen eingesetzt. Bei derartigen Rahmenkonstruktionen kann es sich beispielsweise um Hilfsrahmen handeln, die fahrzeugseitig aufgehängt und an die Lenker der Radaufhängung gelenkig angeschlossen sind. Derartige Träger sind vielfach durch zwei Schalen gebildet, und zwar eine obere Schale und eine untere Schale. Die Schalen sind je nach Auslegung der Trägerkonstruktion mit bestimmten Abschnitten oder auch weitestgehend umlaufend durch Wände miteinander verbunden. Die Steifigkeit eines solchen Trägers resultiert aus seiner auf diese Weise erstellten Kastenbauweise.

Bei derartigen Trägern kann es sich auch um Längsträger handeln, die durch zwei Querträger miteinander verbunden sind und auf diese Weise einen Hilfsrahmen ausbilden. An den Querseiten eines solchen Hilfsrahmens, die quer zur Fahrtrichtung orientiert sind, ist beispielsweise die Vorderradaufhängung mit ihren Quer- bzw. Dreieckslenkern angeschlossen. Der Anschluss derartiger Lenker an die Trägerkonstruktion ist gelenkig ausgeführt. In vielen Fällen werden, um die Träger nicht zu schwächen, die Anschlusspunkte zum Anschließen etwa eines Querlenkers an der Außenseite des Trägers angeordnet. Die Anschlusspunkte werden durch zusätzliche Bauteile bereitgestellt, die mit dem Träger verbunden sind. Der in vielen Fällen zur Verfügung stehende Einbauraum im Bereich des Motorraumes eines Fahrzeuges ist vor allem in denjenigen Bereichen, in denen Vorderradträger angeordnet sind, in aller Regel sehr begrenzt. Bereits die Auslegung des Trägers in Schalenbauweise benötigt zum Erzielen der gewünschten Steifigkeit einen bestimmten Einbauraum, vor allem in Bezug auf die Höhe. Die zusätzlichen Bauteile zum Bereitstellen der Anschlusspunkte vergrößern den benötigten Einbauraum entsprechend. Um diesbezüglich Abhilfe zu schaffen, ist in DE 20 2012 104 070 U1 vorgeschlagen worden, wenigstens einen Anschlusspunkt zwischen den Schalen des Trägers anzuordnen, sodass der daran anzuschließende Lenker mit einem Lenkeranschlussteil in den Ausschnitt eingreift und an die durch die obere Schale und die untere Schale bereitgestellten Anbindungspunkte angeschlossen ist. Durch diese Maßnahme ist der für die Unterbringung einer solchen Trägerkonstruktion benötigte Bauraum gegenüber solchen Ausgestaltungen, bei denen die Anschlusspunkte auf dem Träger befestigt sind, reduziert. Allerdings hat diese Maßnahme zur Folge, dass ein solcher Träger bzw. die damit bereitgestellte Trägerkonstruktion, beispielsweise als Hilfsrahmen ausgeführt, im Bereich der Anbindungspunkte nicht immer die gewünschte Steifigkeit aufweist. Derartige Trägerkonstruktionen sind auch aus US 2014/0265442 A1 sowie JP 2014-118093 A bekannt.

US 2012/0319389 A1 offenbart einen Hilfsrahmen für eine Radaufhängung. Dieser vorbekannte Hilfsrahmen umfasst ein oberes Teil und ein unteres Teil, an den an den beiden in Fahrzeugquerrichtung befindlichen Enden besonders steife, im Querschnitt U-förmige Seitenendstücke angeordnet sind. Die Öffnung dieser Seitenendstücke weist in Fahrzeugquerrichtung. Die parallelen Schenkel dieser Bauteile setzen die Ebene des oberen Teils bzw. des unteren Teils in Querrichtung des Fahrzeuges fort. In die seitlich offene Aufnahme greift ein der Fahrzeugaufhängung zugehöriger Lenker ein und ist an die einander in vertikaler Richtung gegenüberliegenden Schenkel dieses Bauteils angeschlossen. Die Längserstreckung dieser beiden Seitenendbauteile bestimmt die Längserstreckung dieses vorbekannten Hilfsrahmens in Längsrichtung des Fahrzeuges. In beiden Fahrzeuglängsrichtungen überragen diese Bauteile das obere Teil und das untere Teil, weshalb in einer Draufsicht dieser Hilfsrahmen eine doppel-T-förmige Geometrie aufweist. Diese Form ist zum Einsparen von Material und somit zur Reduzierung des Gewichtes des Hilfsrahmens in dieser Form vorgesehen.

JP 2014118093 A offenbart eine Trägerkonstruktion für ein Fahrzeug mit den Merkmalen des Oberbegriffs des Anspruchs 1. Nachteilig bei dieser vorbekannten Trägerkonstruktion ist, dass zu deren Herstellung eine recht große Anzahl an Einzelteilen benötigt wird. Überdies wäre es wünschenswert, wenn diese vorbekannte Trägerkonstruktion durch höhere Steifigkeit ein geringes Deformationsverhalten aufweisen würde.

Ausgehend von dem eingangs diskutierten Stand der Technik liegt der Erfindung daher die Aufgabe zugrunde, eine eingangs genannte Trägerkonstruktion dergestalt weiterzubilden, dass nicht nur die Steifigkeit im Bereich der Anbindungspunkte verbessert ist, sondern dass sich eine solche Trägerkonstruktion auch mit einer nur geringen Anzahl an Einzelteilen herstellen lässt und durch die höhere Steifigkeit ein geringeres Deformationsverhalten aufweist.

Gelöst wird diese Aufgabe erfindungsgemäß durch eine eingangs genannte, gattungsgemäße Trägerkonstruktion, bei der die beiden Anbindungspunkte an jeder Lenkeranbindungsseite des Trägers einem an die Schalen angeschlossenen, zumindest im Bereich der Anbindungspunkte zu einem daran anzuschließenden Lenker hin offenen, als separates Bauteil hergestellten Anbindungseinsatz bereitgestellt sind, welcher Anbindungseinsatz einen Obergurt, einen Untergurt sowie einen den Obergurt mit dem Untergurt verbindenden Rücken aufweist, wobei der Obergurt des Anbindungseinsatzes an den Obergurt des Trägers und der Untergurt des Anbindungseinsatzes an die untere Schale des Trägeres angeschlossen sind, wobei durch den Anbindungseinsatz bereitgestellte Lenkeranschlussteilaufnahmen durch den Rücken von dem zwischen der oberen und der unteren Schale befindlichen Hohlraum des Trägers getrennt sind und wobei die Tiefe des Anbindungseinsatzes im Bereich der beiden die Anbindungspunkte bereitstellenden Lenkeranschlussteilaufnahmen größer ist als in dem die beiden Lenkeranschlussteilaufnahmen verbindenden Abschnitt.

Bei dieser Trägerkonstruktion werden an der oder den beiden Anbindungsseiten die Anbindungspunkte durch jeweils eine als separates Bauteil hergestellten Anbindungseinsatz bereitgestellt. Der Anbindungseinsatz ist in Richtung zu dem daran anzuschließenden Lenker offen, und zwar zumindest im Bereich der Anbindungspunkte. Ein solcher Anbindungseinsatz verfügt über einen Obergurt, einen Untergurt sowie über einen die beiden Gurte miteinander verbindenden Rücken. Ein solcher Anbindungseinsatz ist mit seinem Obergurt mit der oberen Schale des Trägers und mit seinem Untergurt mit der unteren Schale des Trägers verbunden, typischerweise durch eine Fügeverbindung, beispielsweise durch Schweißen. Somit ist ein solcher Anbindungseinsatz zumindest teilweise in den zwischen der oberen Schale und der unteren Schale des Trägers bereitgestellten Hohlraum eingesetzt. Die Längserstreckung der Trägerkonstruktion in Richtung der Mittellängsachse des Fahrzeuges wird durch die obere und untere Schale definiert. Der Rücken der Anbindungseinsätze trennt zumindest im Bereich der Lenkeranschlussteilaufnahmen des Anbindungseinsatzes diese von dem Hohlraum zwischen der oberen und der unteren Schale des Trägers. Vorzugsweise erstreckt sich der Rücken über die gesamte Länge des Anbindungseinsatzes und folgt seiner Kontur. Dieses erhöht die Steifigkeit der vornehmlich durch die beiden Schalen bereitgestellten Trägerkonstruktion. Das Vorsehen eines solchermaßen konzipierten Anbindungseinsatzes zum Bereitstellen der Anschlusspunkte verleiht der Trägerkonstruktion im Bereich der Anbindungspunkte die gewünschte Steifigkeit. Dieses gelingt allein durch die Implementierung des Anbindungseinsatzes in die Trägerkonstruktion. Der Anbindungseinsatz stellt somit zugleich an der jeweiligen Lenkeranbindungsseite einen Versteifungseinleger dar, der aufgrund seiner Konzeption mit Obergurt, Untergurt und einem die beiden Gurte verbindenden Rücken selbst als Träger ausgeführt ist. Vorteilhaft ist zudem, dass durch die separate Herstellung des die Anbindungspunkte bereitstellenden Anbindungseinsatzes die Anbindungspunkte selbst zueinander in sehr viel engeren Toleranzgrenzen ausgeführt werden können, verglichen mit einer Ausgestaltung, bei der die Anbindungspunkte durch die sehr viel größeren Trägerschalen bereitgestellt werden. Bei dem Anbindungseinsatz können die typischerweise als Durchbrechungen ausgeführten Anbindungspunkte nach einem formgebenden Prozess durch eine Bohrung ausgebildet werden, wohingegen bei herkömmlichen Trägern, bei denen die Anbindungspunkte in die beiden Schalen eingebracht sind, diese Anbindungspunkte vorkonfiguriert waren, bevor die obere Schale und die untere Schale zum Ausbilden des Trägers miteinander montiert und verbunden worden sind. Ein Anbindungsseinsatz, wie vorstehend beschrieben, ist unabhängig von den sehr viel größeren Schalen herstellbar. Die Anbindungspunkte können in das bezüglich des Trägers relativ kleine Anbindungseinsatzbauteil eingebracht werden, wenn dieses hinsichtlich seiner übrigen Geometrie fertiggestellt ist. Somit können die zusammenwirkenden Anbindungspunkte im Obergurt und im Untergurt eines solchen Anbindungsansatzes in sehr engen Toleranzen fluchtend zueinander hergestellt werden. Ein solcher kann einstückig aus einer Metallplatine, typischerweise eine Stahlblechplatine, im Wege eines Tiefziehprozesses hergestellt sein. Möglich ist auch die Herstellung eines solchen Anbindungseinsatzes aus beispielsweise zwei Schalen, die zur Bereitstellung des Anbindungseinsatzes miteinander verbunden werden.

Durch den Einsatz der Anbindungseinsätze hält die Trägerkonstruktion auf Grund seiner höheren Steifigkeit ein geringeres Deformationsverhalten und somit ein höheres Widerstandsmoment.

Diese Verstärkung bzw. Versteifung im Bereich der Lenkeranbindungsseiten des Trägers kann genutzt werden, um daran zusätzliche Bauteile der Trägerkonstruktion anzuschließen, insbesondere solche Bauteile, über die Kräfte aufgenommen bzw. weitergeleitet werden sollen, und zwar ohne dass für den Anschluss derartiger Zusatzbauteile ansonsten notwendige Zusatzmontageelemente benötigt werden. Bei solchen Zusatzbauteilen kann es sich beispielsweise um auch als Hörner angesprochene Ausleger handeln, an denen der Fahrzeugmotor abgestützt sein kann. Zwei einander bzgl. der Mittellängsachse des Trägers (Längsrichtung in Fahrtrichtung des Fahrzeuges) gegenüberliegende Ausleger können auf Grund ihrer Verbindung durch die übrigen Bestandteile der Trägerkonstruktion eine sogenannte Pendelstange ausbilden. Dabei stellen die Ausleger Anschlussfortsätze der Pendelstange dar, während das diese Ausleger verbindende Teil durch den Hilfsrahmen bzw. die übrigen Bestandteile der Trägerkonstruktion selbst bereitgestellt wird. Es ist erforderlich, dass derartige Ausleger besonders stabil und steif an den Träger der Trägerkonstruktion angeschlossen sind. Bei einer Trägerkonstruktion, wie vorstehend beschrieben, ist dieser im Bereich der Lenkeranbindungsseiten durch die Anbindungseinsätze verstärkt. Diese Verstärkung kann daher zum Anschluss derartiger Ausleger genutzt werden. Gemäß einem Ausführungsbeispiel werden diese an einen Abschnitt des Rückens des Anbindungseinsatzes angeschlossen, beispielsweise mittels einer Fügeverbindung, etwa einer Schweißverbindung. Für die Realisierung derartiger Pendelstangen war zuvor ein deutlich größerer Bauteilaufwand erforderlich, insbesondere in Bezug auf die zur Realisierung einer solchen Pendelstrange notwendigen Teile. Der Anschluss derartiger Ausleger an einen Anbindungseinsatz bewirkt zudem eine zusätzliche Versteifung der Trägerkonstruktion im Bereich der Anschlusspunkte, sodass dieses bei der Auslegung des Anbindungseinsatzes berücksichtigt werden kann. Insofern können bei einer solchen Ausgestaltung diese beiden Teile gewichtsoptimiert ausgelegt werden.

Die Konzeption eines Anbindungseinsatzes zum Bereitstellen der Anbindungspunkte bei einem solchen Träger erlaubt auch eine Ausbildung desselben, bei der ein solcher Anbindungseinsatz im Bereich der beiden die Anbindungspunkte bereitstellenden Lenkeranschlussteilaufnahmen eine größere Tiefe aufweist als in dem die Lenkeranschlussteilaufnahmen verbindenden Abschnitt. In einer Draufsicht hat ein solcher Anbindungseinsatz durch seine breiten ausgeführten Endabschnitte mit den Anbindungspunkten gegenüber dem diese Bereiche verbindenden Mittelstück eine knochenförmige Anmutung. Die größere Tiefe kann durch eine entsprechende Ausbildung des Anbindungseinsatzes bzw. seines Obergurtes und seines Untergurtes auch in beide Querrichtungen vorgesehen sein. Eine größere Tiefe des Anbindungseinsatzes im Bereich der Anbindungspunkte führt zu einem konturiert ausgeführten Rücken, der mittels eines Bogenabschnittes die Lenkeranschlussteilaufnahmen in Richtung zu der oberen Schale und der unteren Schale des Trägers begrenzt. Eine solche bogenförmige Ausführung erhöht zusätzlich die Steifigkeit in diesem Bereich des Trägers.

Bei einem solchen Anbindungseinsatz wird ein Anbindungspunkt jeweils durch einen oberen Anbindungspunkt im Obergurt und einen unteren Anbindungspunkt im Untergurt bereitgestellt. Diese sind typischerweise durch eine Durchbrechung gebildet. Der den Anbindungspunkt bildende Bereich des Anbindungseinsatzes kann verprägt sein, und zwar sowohl negativ als auch positiv. Eine solche Verprägung erhöht die Steifigkeit im Anbindungsbereich eines Lenkers. Die Ausbildung der Verprägung - positiv oder negativ - richtet sich nach der Auslegung der Trägerkonstruktion. Diese kann bei den beiden Anbindungspunkten eines Anbindungseinsatzes auch unterschiedlich sein.

Zur Verbesserung der Steifigkeit der Trägerkonstruktion können auch Schweißnähte beitragen, mit denen die Anbindungseinsätze mit der angrenzenden oberen Schale und der unteren Schale des Trägers verbunden sind. In einem Ausführungsbeispiel ist vorgesehen, dass die obere Schale und die untere Schale eine der geometrischen Ausbildung der Bereiche der Anbindungspunkte entsprechende Anbindungspunktkontur aufweisen, wodurch die Länge einer den Anbindungseinsatz mit der jeweiligen Schale verbindenden Schweißnaht am Obergurt bzw. am Untergurt vergrößert ist. Die Anbindungspunktkontur fasst vorzugsweise bereichsweise den Anbindungspunkt des Anbindungseinsatzes, etwa mit einem Bogenabschnitt, ein, sodass in diesem Bereich die Schweißnaht beispielsweise in einem Bogensegment geführt ist. Auch dieses wirkt sich positiv auf eine Verbesserung der Steifigkeit des Trägers im Bereich der Anbindungspunkte aus. Weist ein Anbindungseinsatz im Bereich seiner Anbindungspunkte eine Verprägung auf, ist die angrenzende Schale des Trägers in entsprechender Weise verprägt. In anderen Fällen wird die Verprägung der Anbindungskontur der Schalen ausgeführt, damit diese um den Radius zwischen dem Rücken und dem Ober- bzw. Untergurt herumgeführt ist und sodann auf der Flachseite des jeweiligen Gurtes anliegt. Diese Verprägung der oberen und/oder unteren Schale des Trägers wirkt nach Art einer Sicke, was wiederum die Steifigkeit der Trägerkonstruktion verbessert.

Nachfolgend ist die Erfindung anhand eines Ausführungsbeispiels unter Bezugnahme auf die beigefügten Figuren beschrieben. Es zeigen:
- **Fig. 1:**: Eine perspektivische Darstellung nach Art einer Explosionsdarstellung einer als Hilfsrahmen ausgelegten Trägerkonstruktion für ein Fahrzeug,
- **Fig. 2:**: ein Anbindungseinsatz als Teil der Trägerkonstruktion der Figur 1 in Alleindarstellung in einer perspektivischen Draufsicht,
- **Fig. 3:**: der Anbindungseinsatz der Figuren 2 und 3 in einer Draufsicht,
- **Fig. 4:**: der Anbindungseinsatz der Figur 2 in einer Seitenansicht,
- **Fig. 5:**: eine perspektivische Darstellung der Trägerkonstruktion,
- **Fig. 6:**: eine Draufsicht auf die Trägerkonstruktion der Figur 6 mit einem an einer Seite daran angeschlossenen Querlenker und
- **Fig. 7:**: einen Schnitt durch die Trägerkonstruktion der Figur 7 mit dem daran angeschlossenen Querlenker entlang der Linie A-A der Figur 7.

Eine als Hilfsrahmen für ein Kraftfahrzeug, insbesondere einen Personenkraftwagen, ausgelegte Trägerkonstruktion 1 umfasst einen Träger 2. Dieser Träger 2 umfasst eine obere Schale 3 und eine untere Schale 4. An der unteren Schale 4 ist ein aus der Ebene der unteren Schale 4 abgekantetes Wandsegment 5 angeformt. Zusammen mit weiteren Wandsegmenten 6, 6.1, 7 und einem an der oberen Schale 3 angeformten Wandsegment 8 ist ein kastenartiger Träger bereitgestellt. Die vorgenannten Bestandteile sind miteinander durch Schweißen verbunden.

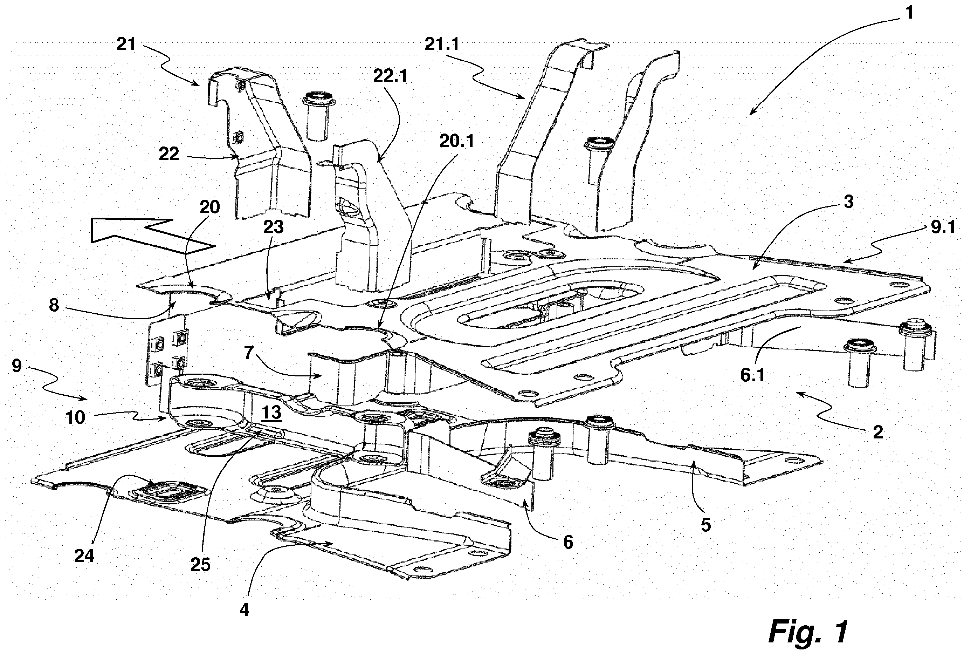

Die Orientierung der Trägerkonstruktion 1 im Fahrzeug ist durch den in Fahrtrichtung weisenden Blockpfeil kenntlich gemacht. Der Träger 2 weist zwei Querseiten auf. Bei diesen handelt es sich um Lenkeranbindungsseiten 9, 9.1. Diese Seiten des Trägers 2 weisen quer zur Fahrtrichtung. Die Längserstreckung der Lenkeranbindungsseiten 9, 9.1 folgt der Fahrtrichtung. An diesen Seiten sind Anbindungspunkte zum Anschließen jeweils eines Querlenkers vorgesehen. Die Anbindungspunkte an jeder Lenkeranbindungsseite 9, 9.1 werden durch jeweils einen Anbindungseinsatz 10 bereitgestellt. Bei den Anbindungseinsätzen 10 handelt es sich, wie aus Figur 1 erkennbar, um separate Bauteile, die zusammen mit der oberen Schale 3, der unteren Schale 4 und den weiteren Komponenten zur Ausbildung der Trägerkonstruktion 1 mit der oberen Schale 3 und der unteren Schale 4 durch Schweißverbindungen verbunden wird.

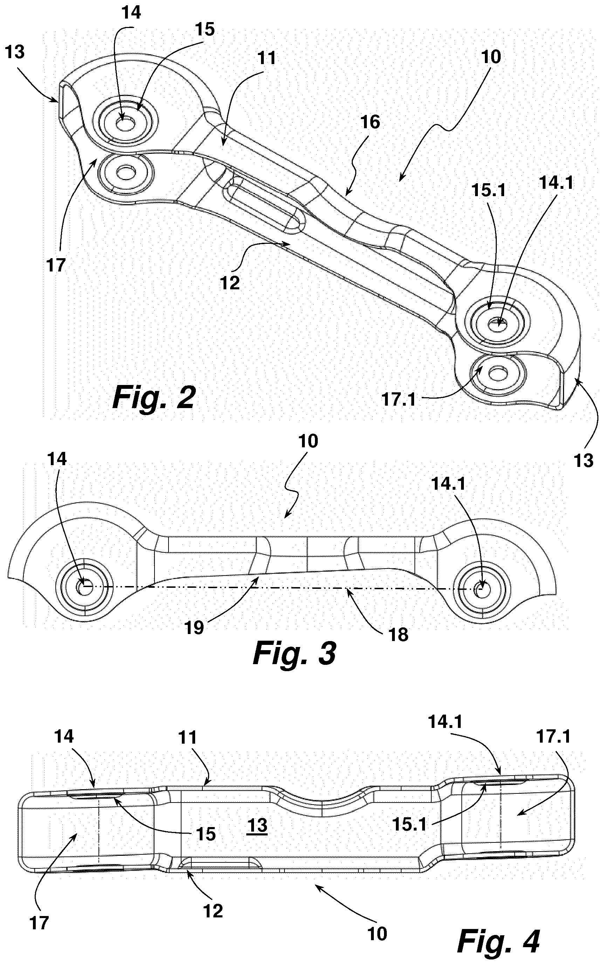

Ein Anbindungseinsatz 10 ist mit mehr erkennbaren Details in der perspektivischen Darstellung der Figur 2 in Alleinstellung gezeigt. Der Anbindungseinsatz 10 verfügt über einen Obergurt 11 und einen Untergurt 12. Die beiden Gurte 11, 12 sind an ihrer zu dem Hohlraum zwischen der oberen Schale 3 und der unteren Schale 4 weisenden Seite durchgängig durch einen Rücken 13 miteinander verbunden. Der Obergurt 11 und der Untergurt 12 weisen eine knochenförmige Umrissgeometrie (s. Figur 3) auf. In den die größere Tiefe aufweisenden Endabschnitten befinden sich die Anbindungspunkte 14, 14.1 zum Anschließen eines Querlenkers. Jeder Anbindungspunkt 14, 14.1 ist durch einen oberen Anbindungspunkt und einen unteren Anbindungspunkt gebildet, wobei der obere Anbindungspunkt als Durchbrechung in den Obergurt 11 und der untere Anbindungspunkt als Durchbrechung in dem Untergurt 12 ausgeführt ist. Die Durchbrechungen befinden sich bei dem dargestellten Ausführungsbeispiel jeweils in einer Verprägung 15, 15.1, die bei dem in der Figur dargestellten Ausführungsbeispiel als negative Verprägungen und somit als zu dem jeweils gegenüberliegenden Gurt hingerichtete Verprägungen ausgeführt sind. Durch die Verprägungen 15, 15.1, die in Figur 3 nur an dem Obergurt 11 kenntlich gemacht sind (auch der Untergurt 12 verfügt über entsprechende Verprägungen), ist der Bereich der Anschlusspunkte 14, 14.1 durch eine durch die Verprägung hergestellte umlaufende Sicke versteift.

Die Tiefe des Anbindungseinsatzes 10 im Bereich der Anbindungspunkte 14, 14.1 ist größer als seine Tiefe in dem dazwischenliegenden Abschnitt 16. Der Anbindungseinsatz 10 ist in Richtung zu einem anzuschließenden Querlenker offen. Im Bereich der Anbindungspunkte 14, 14.1 sind in Richtung zu dem Querlenker hin offene Lenkeranschlussteilaufnahmen 17, 17.1 gebildet. Die größere Tiefe im Bereich der Lenkeranschlussteilaufnahmen 17, 17.1 des Anbindungseinsatzes 10 bedingt die knochenförmige Umrissgeometrie des Anbindungseinsatzes 10 in einer Draufsicht (s. Figur 3). Damit ein Querlenker nicht zu tief zwischen die obere Schale 3 und die untere Schale 4 des Trägers 2 eingreifen muss, befindet sich die Verbindungslinie 18 der Anschlusspunkte 14, 14.1 vor dem nach außen weisenden Abschluss 19 des Anbindungseinsatzes 10, welcher Abschluss zugleich den diesbezüglich seitlichen Abschluss der Trägerkonstruktion 1 darstellt.

Figur 3 zeigt den Anbindungseinsatz 10 in einer Seiteneinsicht, und zwar in die beiden Lenkeranschlussteilaufnahmen 17, 17.1 und in den ebenfalls in diese Richtung hin offenen Abschnitt 16 hinein. Die Verprägungen 15, 15.1 der Anbindungspunkte 14, 14.1 sind darin deutlich zu erkennen. Die übrige Ausgestaltung des Anbindungseinsatzes 10 ist an die vorgesehene Ausgestaltung der Trägerkonstruktion 1 angepasst.

Die obere Schale 3 weist zum Anschluss des Anbindungseinsatzes 10 jeweils eine Anbindungspunktkontur 20, 20.1 auf. Die Anbindungspunktkonturen 20, 20.1 sind an die Außenkontur des Anbindungseinsatzes 10, und zwar im Übergang von seinem Rücken 13 in den Obergurt 11 angepasst. Daher sind die Anbindungspunktkonturen 20, 20.1 durch eine Verprägung bereitgestellt. Entsprechend ist die untere Schale 4 ebenfalls mit Anbindungspunktkonturen ausgestattet.

Teil der Trägerkonstruktion 1 sind zudem zwei Ausleger 21, 21.1, die zusammen mit den übrigen Bestandteilen der Trägerkonstruktion 1 eine Pendelstange bilden. Der Ausleger 21 - gleiches gilt für den Ausleger 21.1 - ist bei dem dargestellten Ausführungsbeispiel aus zwei Schalen 22, 22.1 zusammengesetzt. Dieser ist somit nach Art eines Kastens ausgeführt. Die obere Schale 3 verfügt über eine umfänglich vollständig eingefasste Aussparung 23, in die der Ausleger 21 eingesetzt wird. Die Schalen 22, 22.1 weisen an dem unteren Abschluss ihrer Seitenwände jeweils einen Montagefortsatz auf, der in entsprechende Aussparungen in die untere Schale 4 eingreift. Der Montagebereich, auf dem der Ausleger 21 auf der unteren Schale 4 montiert und mit dieser verschweißt wird, ist in Figur 1 mit dem Bezugszeichen 24 gekennzeichnet. Ausgenutzt wird für diese Montage, dass der Anbindungseinsatz 10 zwischen die obere Schale 3 und die untere Schale 4 und somit in den von den beiden Schalen 3, 4 in vertikaler Richtung begrenzen Hohlraum eingreifend eingesetzt sind. Hierdurch wird erreicht, dass der Montagebereich 24 unmittelbar an den Rücken 13 des Anbindungseinsatzes 10 grenzt. Es ist vorgesehen, dass die zu dem Anbindungseinsatz 10 weisende Fläche des in die obere Schale 3 eingesetzten Abschnittes des Auslegers 21 an den Rücken 13 des Anbindungseinsatzes 10 grenzt. Um dieses trotz der sickenförmigen Verstärkung des Montagebereichs 24 zu ermöglichen, weist der Anbindungseinsatz 10 an dieser Stelle eine Verprägung 25 (s. Figur 2) auf.

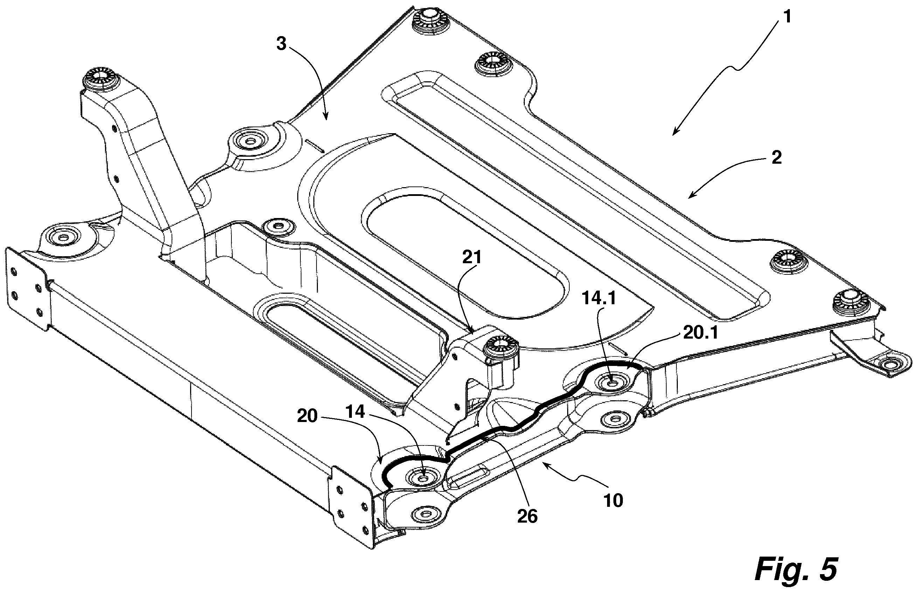

Die perspektivische Ansicht der Trägerkonstruktion 1 in der Figur 5 zeigt die Implementierung des Anbindungseinsatzes 10 zwischen der oberen Schale 3 und der unteren Schale 4 des Trägers 2. Deutlich erkennbar aus dieser Figur ist, dass die Anbindungseinsätze 10 zwischen die obere Schale 3 und die untere Schale 4 eingesetzt sind. Die Längserstreckung der Trägerkonstruktion 1 wird durch die obere Schale 3 und die untere Schale 4 definiert. Die Längserstreckung der Anbindungseinsätze 10 entspricht nur einen Bruchteil der Längserstreckung der Trägerkonstruktion 1. Mit ihren Anbindungspunktkonturen 20, 20.1 fasst die obere Schale 3 bereichsweise die Anbindungspunkte 14, 14.1 und damit die diese bildenden Verprägungen 15, 15.1 ein. Verbunden ist der Anbindungseinsatz 10 mit der oberen Schale 3 durch eine über die gesamte Länge geführte Schweißnaht 26. In derselben Weise ist der Anbindungseinsatz 10 mit der unteren Schale 4 verbunden. Damit weist die Trägerkonstruktion 1 im Bereich des Anbindungseinsatzes 10 eine besondere Steifigkeit auf. Diese ist ausreichend, um daran den Ausleger 21 als Anschlussfortsatz für die Pendelstangenfunktion anzuschließen. Dieses erhöht weiterhin die Steifigkeit der Trägerkonstruktion 1, sodass durch diese Maßnahme eine weitere Versteifung der Lenkeranbindungsseiten 9, 9.1 erreicht ist. Insofern ist die Aussteifung mittels des Anbindungseinsatzes 10 vorteilhaft für die Querlenkeranbindung und ebenso vorteilhaft für die Anbindung eines Auslegers 21, 21.1.

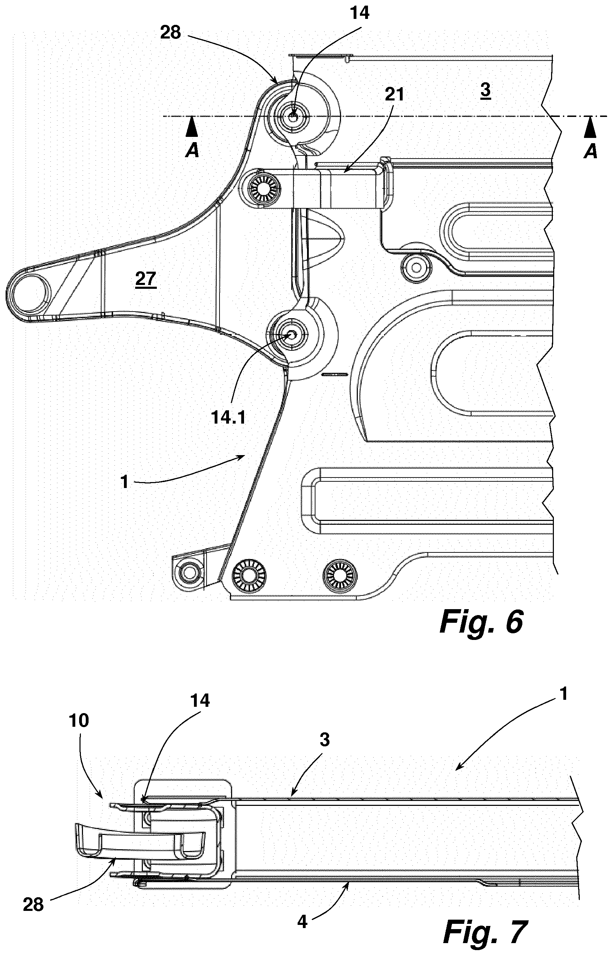

Figur 6 zeigt die Trägerkonstruktion 1 in einer Draufsicht mit einem daran angeschlossenen Querlenker 27. Dieser ist mit jeweils einem Anschlussteil 28, 28.1 an den Anbindungspunkt 14 bzw. 14.1 in nicht näher dargestellter Weise angeschlossen. Der Eingriff des Anschlussteils 28 in die Lenkeranschlussteilaufnahme 17 des Anbindungseinsatzes 10 ist in der Schnittdarstellung der Figur 7 gezeigt. Die konkrete mechanische Verbindung mit dem Gelenk ist zur Vereinfachung der Darstellung in Figur 7 nicht gezeigt.

In einer in den Figuren nicht dargestellten Weiterbildung ist vorgesehen, dass die lenkeranbindungsseitigen Abschlüsse der oberen Schale und der unteren Schale eine jeweils voneinander weggerichtete Abwinklung aufweisen, ebenso wie der Obergurt und der Untergurt des Anbindungseinsatzes. Durch diese Maßnahme erfolgt eine weitere Versteifung der Trägerkonstruktion im Bereich der Lenkeranbindungsseiten.

Die Erfindung ist anhand eines Ausführungsbeispiels erläutert worden. Ohne den Umfang der geltenden Ansprüche zu verlassen, ergeben sich für einen Fachmann zahlreiche weitere Ausgestaltungen, die Erfindung im Rahmen der Ansprüche umsetzen zu können.

### Bezugszeichenliste

- 1: Trägerkonstruktion
- 2: Träger
- 3: Obere Schale
- 4: Untere Schale
- 5: Wandsegment
- 6,6.1: Wandsegment
- 7: Wandsegment
- 8: Wandsegment
- 9,9.1: Lenkeranbindungsseite
- 10: Anbindungseinsatz
- 11: Obergurt
- 12: Untergurt
- 13: Rücken
- 14, 14.1: Anbindungspunkt
- 15, 15.1: Verprägung
- 16: Abschnitt
- 17, 17.1: Lenkeranschlussteilaufnahme
- 18: Verbindungslinie
- 19: Abschluss
- 20,20.1: Anbindungspunktkontur
- 21,21.1: Ausleger
- 22,22.1: Schale
- 23: Aussparung
- 24: Montagebereich
- 25: Verprägung
- 26: Schweißnaht
- 27: Querlenker
- 28: Anschlussfortsatz

## Patentansprüche

1. Trägerkonstruktion für ein Fahrzeug mit einem eine obere Schale (3) und eine untere Schale (4) aufweisenden Träger (2), wobei die Erstreckung der Trägerkonstruktion in Längserstreckung des Fahrzeuges durch die in diese Richtung weisende Erstreckung der beiden Schalen (3, 4) definiert ist, und mit Anbindungspunkten (14, 14.1) zum Anschließen eines Lenkers (27), wobei an jeder Lenkeranbindungsseite (9, 9.1) ein vorderer Anbindungspunkt und ein hinterer Anbindungspunkt vorgesehen sind, **dadurch gekennzeichnet, dass** die beiden Anbindungspunkte (14, 14.1) an jeder Lenkeranbindungsseite (9, 9.1) des Trägers (2) einem an die Schalen (3, 4) angeschlossenen, zumindest im Bereich der Anbindungspunkte (14, 14.1) zu einem daran anzuschließenden Lenker (27) hin offenen, als separates Bauteil hergestellten Anbindungseinsatz (10) bereitgestellt sind, welcher Anbindungseinsatz (10) einen Obergurt (11), einen Untergurt (12) sowie einen den Obergurt (11) mit dem Untergurt (12) verbindenden Rücken (13) aufweist, wobei der Obergurt (11) des Anbindungseinsatzes (10) an die obere Schale (3) des Trägers (2) und der Untergurt (12) des Anbindungseinsatzes (10) an die untere Schale (4) des Trägeres (2) angeschlossen sind, wobei durch den Anbindungseinsatz (10) bereitgestellte Lenkeranschlussteilaufnahmen (17, 17.1) durch den Rücken (13) von dem zwischen der oberen und der unteren Schale (3, 4) befindlichen Hohlraum des Trägers (2) getrennt sind und wobei die Tiefe des Anbindungseinsatzes (10) im Bereich der beiden die Anbindungspunkte (14, 14.1) bereitstellenden Lenkeranschlussteilaufnahmen (17, 17.1) größer ist als in dem die beiden Lenkeranschlussteilaufnahmen (17, 17.1) verbindenden Abschnitt (16).

2. Trägerkonstruktion nach Anspruch 1, **dadurch gekennzeichnet, dass** die Anschlusspunkte (14, 14.1) der Anbindungseinsätze (10) jeweils durch einen oberen Anbindungspunkt im Obergurt (11) und einen unteren Anbindungspunkt im Untergurt (12) bereitgestellt sind.

3. Trägerkonstruktion nach Anspruch 2, **dadurch gekennzeichnet, dass** die Anbindungspunkte (14, 14.1) als Durchbrechungen ausgeführt sind.

4. Trägerkonstruktion nach Anspruch 2 oder 3, **dadurch gekennzeichnet, dass** die oberen und unteren Anbindungspunkte einer Verprägung (15, 15.1) des Obergurtes (11) und des Untergurtes (12) angeordnet sind.

5. Trägerkonstruktion nach einem der Ansprüche 2 bis 4, **dadurch gekennzeichnet, dass** eine Verbindungslinie (18) der beiden Anschlusspunkte (14, 14.1) eines Anbindungseinsatzes (10) außenseitig und mit Abstand zum äußeren Abschluss (19) des die beiden Lenkeranschlussteilaufnahmen (17, 17.1) verbindenden Abschnittes (16) verläuft.

6. Trägerkonstruktion nach Anspruch 5, **dadurch gekennzeichnet, dass** in einer Draufsicht der Anbindungseinsatz (10) eine knochenförmige Außenkontur aufweist.

7. Trägerkonstruktion nach einem der Ansprüche 1 bis 6, **dadurch gekennzeichnet, dass** der Rücken (13) die durch den Obergurt (11) und Untergurt (12) des Anbindungseinsatzes (10) bereitgestellte Kammer durchgängig von dem zwischen den Schalen (3, 4) des Trägers (2) befindlichen Hohlraum trennt.

8. Trägerkonstruktion nach einem der Ansprüche 1 bis 7, **dadurch gekennzeichnet, dass** die obere Schale (3) und die untere Schale (4) des Trägers (2) eine Anbindungspunktkontur (20, 20.1) aufweisen, die an den nach oben bzw. nach unten weisenden Seiten des Obergurtes (11) bzw. des Untergurtes (12) einen Bereich um einen Anbindungspunkt (14, 14.1) des benachbarten Anbindungseinsatzes (10) einfassen und dass die Anbindungspunktkonturen mit dem benachbarten Anbindungseinsatz der Anbindungspunktkontur folgend verschweißt sind.

9. Trägerkonstruktion nach Anspruch 7 oder 8 in seinem Rückbezug auf Anspruch 4, **dadurch gekennzeichnet, dass** die Anbindungspunktkonturen (20, 20.1) der Schalen (3, 4) des Trägers (2) entsprechend der jeweils angrenzenden Verprägung (25) des Anbindungseinsatzes (10) verprägt sind.

10. Trägerkonstruktion nach einem der Ansprüche 1 bis 7, **dadurch gekennzeichnet, dass** wenigstens eine Schale (3) des Trägers (2) eine Aussparung (23) zum Einsetzen eines Abschnittes eines von der Ebene des Trägers (2) abragenden Auslegers (21, 21.1) aufweist und diese Aussparung (23) mit einer ihrer Begrenzungsseiten in der Flucht des Rückens (13) des Anbindungseinsatzes (10) verläuft, sodass der in die Aussparung (23) eingreifende Abschnitt des Auslegers (21, 21.1) an dem Rücken (13) zur Anlage gelangt und mit diesem gefügt ist.

11. Trägerkonstruktion nach einem der Ansprüche 1 bis 10, **dadurch gekennzeichnet, dass** der zumindest eine Anbindungseinsatz (10) ein tiefgezogenes Stahlblechteil ist.

12. Trägerkonstruktion nach einem der Ansprüche 1 bis 11, **dadurch gekennzeichnet, dass** die Trägerkonstruktion (1) ein Hilfsrahmen ist.

## Claims

1. Support structure for a vehicle, comprising a support (2) having an upper shell (3) and a lower shell (4), wherein the extension of the support structure in the longitudinal extension of the vehicle is defined by the extension of the two shells (3, 4), and with attachment points (14, 14.1) for connecting a link (27), wherein, on each link attachment side (9, 9.1) a front attachment point and a rear attachment point are provided, **characterised in that** the two attachment points (14, 14.1) are provided for an attachment insert (10) on each link attachment side (9, 9.1) of the support (2), connected to the shells (3, 4), which is open towards a link (27) to be connected to the attachment points (14, 14.1) at least in the region of the attachment points, and is produced as a separate component, which attachment insert (10) comprises an upper chord (11), a lower chord (12), and a back section (13) connecting the upper chord (11) to the lower chord (12), wherein the upper chord (11) of the attachment insert (10) is connected to the upper shell (3) of the support (2), and the lower chord (12) of the attachment insert (10) is connected to the lower shell (4) of the support (2), wherein link connection sub-receiving areas (17, 17.1) provided by the attachment insert (10) are separated from the cavity of the support (2) located between the upper and lower shells (3, 4) by the back section (13), and wherein the depth of attachment insert (10) in the region of the two link connection sub-receiving areas (17, 17.1) providing the attachment points (14, 14.1) is greater than in the section (16) connecting the two link connection sub-receiving areas (17, 17.1).

2. Support structure according to claim 1, **characterised in that** the attachment points (14, 14.1) of the attachment insert (10) are in each case provided by an upper attachment point in the upper chord (11) and a lower attachment point in the lower chord (12).

3. Support structure according to claim 2, **characterised in that** the attachment points (14, 14.1) are configured as passage apertures.

4. Support structure according to claim 2 or 3, **characterised in that** the upper and lower attachment points are assigned to an embossed indentation (15, 15.1) of the upper chord (11) and of the lower chord (12).

5. Support structure according to any one of claims 2 to 4, **characterised in that** a connection line (18) of the two attachment points (14, 14.1) of an attachment insert (10) runs on the outside and at a distance from the outer termination (19) of the section (16) connecting the two connection sub-receiving areas (17, 17.1).

6. Support structure according to claim 5, **characterised in that,** in a view from above, the attachment insert (10) exhibits a bone-shaper outer contour.

7. Support structure according to any one of claims 1 to 6, **characterised in that** the back section (13) continuously separates the cavity located between the shells (3, 4) of the support (2) from the chamber provided by the upper chord (11) and the lower chord (12) of the attachment insert (10).

8. Support structure according to any one of claims 1 to 7, **characterised in that** the upper shell (3) and the lower shell (4) of the support (2) exhibit an attachment point contour (20, 20.1) which, on the sides of the upper chord (11) and the lower chord (12) respectively, facing upwards and downwards respectively, encompasses a region around an attachment point (14, 14.1) of the adjacent attachment insert (10), and that the attachment point contours are subsequently welded to the adjacent attachment insert of the attachment point contour.

9. Support structure according to claims 7 or 8, in their reference to claim 4, **characterised in that** the attachment point contours (20, 20.1) of the shells (3, 4) of the support (2) are embossed so as to correspond to the respective adjacent embossed indentation (25) of the attachment insert (10).

10. Support structure according to any one of claims 1 to 7, **characterised in that** at least one shell (3) of the support (2) comprises a cut-out opening (23) for the insertion of a section of an arm (21, 21.1) projecting from the plane of the support (2), and this cut-out opening (23) runs with one of its delimitation sides flush with the back section (13) of the attachment insert (10), such that the section of the arm (21, 21.1) which engages into the cut-out opening (23) comes in contact with the back section (13) and is joined to it.

11. Support structure according to any one of claims 1 to 10, **characterised in that** the at least one attachment insert (10) is a deep-drawn sheet steel component.

12. Support structure according to any one of claims 1 to 11, **characterised in that** the support structure (1) is an ancillary frame.

## Revendications

1. Structure porteuse pour un véhicule comportant un rail (2) présentant une coque supérieure (3) et une coque inférieure (4), l'étendue de la structure porteuse dans l'étendue longitudinale du véhicule étant définie par l'étendue orientée dans ce sens des deux coques (3, 4), et avec des points d'attache (14, 14.1) destinés à raccorder un bras de direction (27), un point d'attache avant et un point d'attache arrière étant prévu de chaque côté d'attache du bras de direction (9, 9.1), **caractérisée en ce que** les deux points d'attache (14, 14.1) sont, de chaque côté d'attache (9, 9.1) du bras de direction du rail (2), mis à la disposition d'un insert d'attache (10) fabriqué en tant que pièce séparée, raccordé aux coques (3, 4), ouvert vers un bras de direction (27) qui y sera raccordé au moins dans la zone des points d'attache (14, 14.1), lequel insert d'attache (10) présente une membrure supérieure (11), une membrure inférieure (12) ainsi qu'un dos (13) reliant la membrure supérieure (11) à la membrure inférieure (12), la membrure supérieure (11) du point d'attache (10) étant raccordée à la coque supérieure (3) du rail (2) et la membrure inférieure (12) de l'insert d'attache (10), à la coque inférieure (4) du rail (2), les logements (17, 17.1) des pièces de raccordement du bras de direction mis à disposition par l'insert d'attache (10) étant séparés par le dos (13) de l'espace creux du rail (2) se trouvant entre la coque supérieure et inférieure (3, 4) et la profondeur de l'insert d'attache (10) au niveau des deux logements (17, 17.1) des pièces de raccordement du bras de direction mettant à disposition des points d'attache (14, 14.1) étant plus grande que dans le tronçon (16) raccordant les deux logements (17, 17.1) des pièces de raccordement du bras de direction.

2. Structure porteuse selon la revendication 1, **caractérisée en ce que** les points de raccordement (14, 14.1) des inserts d'attache (10) sont mis à disposition respectivement par un point d'attache supérieur dans la membrure supérieure (11) et par un point d'attache inférieur dans la membrure inférieure (12).

3. Structure porteuse selon la revendication 2, **caractérisée en ce que** les points d'attache (14, 14.1) sont conformés en tant que percements.

4. Structure porteuse selon la revendication 2 ou 3, **caractérisée en ce que** les points d'attache supérieurs et inférieurs sont affectés à un estampage (15, 15.1) de la membrure supérieure (11) et de la membrure inférieure (12).

5. Structure porteuse selon l'une des revendications 2 à 4, **caractérisée en ce qu'**une ligne de liaison (18) des deux points de raccordement (14, 14.1) d'un insert d'attache (10) passe sur la face extérieure et à distance de la terminaison (19) extérieure du tronçon (16) qui relie les deux logements (17, 17.1) des pièces de raccordement du bras de direction.

6. Structure porteuse selon la revendication 5, **caractérisée en ce que,** dans une vue de dessus, l'insert d'attache (10) présente un contour extérieur en forme d'os.

7. Structure porteuse selon l'une des revendications 1 à 6, **caractérisée en ce que** le dos (13) sépare de façon continue le sas, mis à disposition par la membrure supérieure (11) et la membrure inférieure (12) de l'insert d'attache (10), de l'espace creux situé entre les coques (3, 4) du rail (2)

8. Structure porteuse selon l'une des revendications 1 à 7, **caractérisée en ce que** la coque supérieure (3) et la coque inférieure (4) du rail (2) présentent un contour de point d'attache (20, 20.1), qui englobe sur les côtés orientés respectivement vers le haut ou vers le bas de la membrure supérieure (11) ou de la membrure inférieure (12), une zone autour d'un point d'attache (14, 14.1) de l'insert d'attache (10) voisin et que les contours de point d'attache sont soudés avec l'insert d'attache voisin en suivant le contour de point d'attache.

9. Structure porteuse selon la revendication 7 ou 8, avec sa référence à la revendication 4, **caractérisée en ce que** les contours de point d'attache (20, 20.1) des coques (3, 4) du rail (2) sont estampés de manière complémentaire à l'estampage (25) voisin de l'insert d'attache (10).

10. Structure porteuse selon l'une des revendications 1 à 7, **caractérisée en ce qu'**au moins une coque (3) du rail (2) présente un évidement (23) pour y engager un tronçon d'une flèche (21, 21.1) en saillie par rapport au plan du rail (2) et que cet évidement (23) s'étend avec l'une de ses faces de délimitation dans l'alignement du dos (13) de l'insert d'attache (10) de sorte que le tronçon de la flèche (21, 21.1) s'engageant dans l'évidement (23) arrive au contact du dos (13) et avec lequel il est jointé.

11. Structure porteuse selon l'une des revendications 1 à 10, **caractérisée en ce que** l'au moins un insert d'attache (10) est une pièce en tôle d'acier emboutie.

12. Structure porteuse selon l'une des revendications 1 à 11, **caractérisée en ce que** la structure porteuse (1) est un faux-châssis.
